(19) Europäisches Patentamt / European Patent Office / Office européen des brevets

(11) **EP 2 257 904 B1**

(12) **FASCICULE DE BREVET EUROPEEN**

(45) Date de publication et mention de la délivrance du brevet:
**13.02.2019 Bulletin 2019/07**

(51) Int Cl.:
*G06F 7/00* (2006.01)   *G06F 21/75* (2013.01)

(21) Numéro de dépôt: **09725641.6**

(86) Numéro de dépôt international:
**PCT/EP2009/053212**

(22) Date de dépôt: **18.03.2009**

(87) Numéro de publication internationale:
**WO 2009/118264 (01.10.2009 Gazette 2009/40)**

(54) **PROCÉDÉ DE PROTECTION DE CIRCUIT DE CRYPTOGRAPHIE PROGRAMMABLE, ET CIRCUIT PROTEGE PAR UN TEL PROCÉDÉ**

VERFAHREN FÜR DEN SCHUTZ EINER PROGRAMMIERBAREN KRYPTOGRAPHIESCHALTUNG UND ANHAND DIESES VERFAHRENS GESCHÜTZTE SCHALTUNG

METHOD FOR PROTECTING A PROGRAMMABLE CRYPTOGRAPHY CIRCUIT, AND CIRCUIT PROTECTED BY SAID METHOD

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **25.03.2008 FR 0851904**

(43) Date de publication de la demande:
**08.12.2010 Bulletin 2010/49**

(73) Titulaires:
• **Institut Mines Telecom**
**75014 Paris (FR)**
• **Centre National de la Recherche Scientifique**
**75016 Paris (FR)**

(72) Inventeurs:
• **GUILLEY, Sylvain**
**F-75013 Paris (FR)**
• **DANGER, Jean-Luc**
**F-92160 Antony (FR)**
• **HOOGVORST, Philippe**
**F-95170 Deuil La Barre (FR)**

(74) Mandataire: **Lucas, Laurent Jacques et al**
**Marks & Clerk France**
**Conseils en Propriété Industrielle**
**Immeuble Visium**
**22, Avenue Aristide Briand**
**94117 Arcueil Cedex (FR)**

(56) Documents cités:
• **DAISUKE SUZUKI ET AL: "Security Evaluation of DPA Countermeasures Using Dual-Rail Pre-charge Logic Style" CRYPTOGRAPHIC HARDWARE AND EMBEDDED SYSTEMS - CHES 2006 LECTURE NOTES IN COMPUTER SCIENCE;;LNCS, SPRINGER, BERLIN, DE, vol. 4249, 1 janvier 2006 (2006-01-01), pages 255-269, XP019046826 ISBN: 978-3-540-46559-1**
• **MARCO BUCCI ET AL: "Three-Phase Dual-Rail Pre-charge Logic" CRYPTOGRAPHIC HARDWARE AND EMBEDDED SYSTEMS - CHES 2006 LECTURE NOTES IN COMPUTER SCIENCE;;LNCS, SPRINGER, BERLIN, DE, vol. 4249, 1 janvier 2006 (2006-01-01), pages 232-241, XP019046823 ISBN: 978-3-540-46559-1**
• **TIRI K ET AL: "A logic level design methodology for a secure DPA resistant ASIC or FPGA implementation" DESIGN, AUTOMATION AND TEST IN EUROPE CONFERENCE AND EXHIBITION, 2004. PROCEEDINGS FEB. 16-20, 2004, PISCATAWAY, NJ, USA,IEEE, vol. 1, 16 février 2004 (2004-02-16), pages 246-251, XP010684580 ISBN: 978-0-7695-2085-8 cité dans la demande**
• **KUAN JEN LIN ET AL: "Overcoming Glitches and Dissipation Timing Skews in Design of DPA-Resistant Cryptographic Hardware" DESIGN, AUTOMATION&TEST IN EUROPE CONFERENCE&EXHIBITION, 2007. DATE '07, IEEE, PI, 1 avril 2007 (2007-04-01), pages 1-6, XP031092288 ISBN: 978-3-9810801-2-4**

- **RAZAFINDRAIBE A ET AL: "Analysis and Improvement of Dual Rail Logic as a Countermeasure Against DPA", 3 September 2007 (2007-09-03), TED CIRCUIT AND SYSTEM DESIGN : POWER AND TIMING MODELING, OPTIMIZATION AND SIMULATION : 17TH INTERNATIONAL WORKSHOP, PATMOS 2007, GOTHENBURG, SWEDEN, SEPTEMBER 3-5, 2007 ; PROCEEDINGS; [LECTURE NOTES IN COMPUTER SCIENCE], SPRINGER, BERLIN, HEIDELBER, XP019098332, ISBN: 978-3-540-74441-2**

**Description**

La présente invention concerne un procédé de protection d'un circuit de cryptographie programmable. Elle concerne également un circuit protégé par un tel procédé.

Elle s'applique notamment pour protéger ce type de circuit contre les attaques d'analyse différentielle de consommation.

La cryptographie a notamment pour but de protéger :

- soit le secret de l'information par le moyen du chiffrement et de son opération duale : le déchiffrement ;
- soit seulement son intégrité, par les opérations de signature et de vérification de signature.

La cryptographie utilise des méthodes mathématiques sures, en ce sens qu'il n'existe pas dans l'état actuel des connaissances publiées des méthodes d'attaque plus rapide que l'attaque exhaustive correspondant à l'essai de toutes les clés possibles.

En général, les méthodes de chiffrement impliquent des calculs complexes nécessaires à la sécurité des systèmes. Cette complexité ne pose pas de problèmes particuliers aux ordinateurs mais elle constitue un inconvénient dans le cas de dispositifs grand public ne comportant pas une grande puissance de calcul, en général contrôlés par des microprocesseurs à faible coût. Les conséquences peuvent être alors de plusieurs ordres, ainsi par exemple une carte bancaire mettrait plusieurs minutes à signer une transaction ou un décodeur numérique de télévision payante ne pourrait pas suivre le débit d'informations en jeu.

Pour pallier ce type de problème sans augmenter le prix des systèmes, il est habituel d'adjoindre une aide à l'unité centrale contrôlant le dispositif, en général sous la forme d'un coprocesseur dédié à la cryptographie.

Cependant, qu'il soit mis en oeuvre par l'unité centrale ou par un coprocesseur spécialisé, l'algorithme de cryptographie est dans tous les cas mis en oeuvre par un dispositif physique, électronique. Les dispositifs électroniques présentent des imperfections inévitables liées aux propriétés inhérentes des lois de l'électricité.

C'est ainsi que des systèmes cryptographiques sûrs du point de vue mathématique peuvent être attaqués en exploitant les imperfections des systèmes physiques mettant l'algorithme en oeuvre :

- la durée des calculs peut dépendre des valeurs des données, en particulier sur des systèmes logiciels optimisés en temps, ce qui peut donner lieu aux attaques de type « timing attack » permettant dans certains cas de retrouver la totalité des clés secrètes à partir de simples mesures de temps d'exécution ;
- la consommation électrique instantanée peut également dépendre des données, ce qui peut donner lieu à des séries d'attaques telles que :

  - la SPA qui tente de différencier les opérations exécutées par une unité centrale à partir d'une mesure de sa consommation électrique mesurée pendant une opération cryptographique ;
  - l'analyse différentielle de consommation DPA qui utilise des opérations statistiques sur de nombreuses mesures de consommation électrique, effectuées lors d'opérations de cryptographie sur des messages aléatoires et avec une clé constante pour valider ou invalider une hypothèse faite sur une partie limitée de la clé ;
  - les attaques de type « template » qui :

    - dans une première phase utilisent un dispositif identique au dispositif attaqué, à ceci près que ce dispositif identique ne contient aucun secret, pour construire des modèles de consommation indexés par la valeur d'une partie limitée de la clé et ;
    - dans une deuxième phase utilisent quelques mesures de consommation du dispositif attaqué pour déterminer le modèle dont les consommations mesurées sont les plus proches et ainsi déterminer la valeur de cette sous-clé ;

- tout courant électrique circulant dans un conducteur engendre un champ électromagnétique dont la mesure peut donner lieu à des attaques identiques dans leur principe aux attaques portant sur la consommation électrique, notamment par DPA ;
- enfin, des attaques perturbent le fonctionnement des systèmes afin d'exploiter les résultats faux pour retrouver les secrets du système.

On appelle « canal caché » toute imperfection d'un dispositif physique mettant en oeuvre un algorithme de cryptographie et susceptible de laisser fuir de l'information liée aux secrets conservés dans la mémoire du dispositif.

Les circuits reconfigurables du type FPGA (Field Programmable Gate Arrays) sont très utilisés dans les applications nécessitant de la cryptographie. Au moins deux raisons justifient cet état de fait. En premier lieu, les standards de cryptographie évoluent vite, certains algorithmes présentant des vulnérabilités sont remplacés par d'autres qui corrigent les failles. De plus les paramètres de cryptographie, comme la taille des clés, sont également variables. Une flexibilité est donc nécessaire, mais sans compromis sur la performance. En effet, les algorithmes de cryptographie protègent parce que leurs calculs sont complexes. Les FPGA répondent parfaitement à ce besoin de flexibilité et de puissance. En second lieu, certaines applications de cryptographie sont diffusées en faibles volumes. C'est par exemple le cas des systèmes embarqués dans des satellites notamment. La solution FPGA est alors plus rentable qu'une implémentation dédiée du type ASIC par exemple. Comme tous les circuits de cryptographie, les FPGA équipés de fonctions de cryptographie, sont vulnérables aux attaques, notamment par les canaux cachés.

Une solution de contre-mesure connue pour contrer les attaques, notamment par mesure de consommation électrique utilise la logique différentielle, plus particulièrement la duplication des réseaux logiques. Ainsi chaque porte logique est doublée en deux portes physiques duales fonctionnant en logique complémentaire de telle sorte qu'à tout moment une porte duale consomme, rendant la consommation électrique indépendante des données et donc inutilisable pour une DPA notamment. De façon à assurer un nombre de transitions constant à chaque calcul, donc une consommation constante, la logique différentielle nécessite deux phases de travail :

- une phase de précharge pour mettre dans un état connu les variables et ;
- une phase d'évaluation où le calcul est effectué avec un nombre constant de transitions.

La complexité d'un circuit de cryptographie est ainsi plus que doublée du fait de l'utilisation de la logique différentielle et des connexions à double rails nécessaires à sa mise en oeuvre.

Si certains FPGA intègrent des protections contre le piratage de leur configuration, aucun n'a été conçu pour résister à des attaques sur leur implémentation. Les protections proviennent donc de solutions au niveau RTL (Register Transfer Level) notamment comme la logique WDDL proposée dans le document de K.Tiri et I.Verbauwhede « A logic Level Design Methodology for a Secure DPA Resistant ASIC or FPGA Implementation » in Proceedings of DATE'04, pages 246-251, février 2004, ou encore la logique MDPL proposée dans le document de T.Popp et S.Mangard « Masked Dual Rail Pre-Charge Logic : DPA Résistance without routing Constraints » in LNCS, editeur, Proceedings of CHES'05, volume 3659 of LNCS, pages 172-186, Springer, septembre 2005. Ces solutions sont insuffisantes car elles présentent des biais logiques et technologiques qui peuvent être exploités par un attaquant.

Dans tous les types de logiques différentielles proposées, malgré un apparent équilibre de la consommation, des phénomènes du second ordre laissent apparaître des déséquilibres et ainsi des fuites d'information. Les phénomènes les plus importants sont notamment l'évaluation anticipée et les différences technologiques des réseaux différentiels.

L'article de A. Razafindraibe, M. Roberts et P. Maurine intitulé « Analysis Improvement of Dual Rail Logic as a Countermeasure Against DPA » publié en 2007 divulgue un mécanisme de sécurisation de circuits contre des attaques de type DPA, c'est-à-dire contre les attaques par analyse différentielle de consommation. Cette approche connue sous le nom de technique "STTL" demeure toutefois complexe (nombre de fils requis), impose l'emploi de retards et est relativement lente.

Un but de l'invention est notamment de permettre de s'affranchir de ces phénomènes et d'augmenter significativement la difficulté des attaques par mesures de consommation électrique, en particulier sur les circuits de cryptographie en technologie FPGA. A cet effet, l'invention a pour objet un procédé de protection d'un circuit de cryptographie programmable, ledit procédé utilisant des portes elle-mêmes composées de cellules à base de mémoire définissant la fonction logique de chaque cellule, le circuit étant configuré de façon à intégrer un réseau différentiel apte à effectuer des calculs sur des variables binaires composées de couples de signaux, le réseau différentiel comportant un premier réseau de cellules réalisant des fonctions logiques sur la première composante des couples et un deuxième réseau de cellules duales fonctionnant en logique complémentaire sur la deuxième composante des couples. Le calcul comporte deux phases : une phase de précharge mettant les deux signaux de toutes les variables dans un état identique connu (par exemple 0), une phase d'évaluation où le calcul proprement dit est effectué par les cellules, auquel cas un seul signal sur les deux représentant chaque variable est actif, et une phase de synchronisation avant chaque phase de précharge et d'évaluation.

La phase de synchronisation des variables est par exemple effectuée au niveau d'un groupe de variables et est intercalée avant la phase d'évaluation au niveau de chaque cellule apte à recevoir plusieurs signaux véhiculant des variables d'entrée, la synchronisation étant effectuée sur le signal le plus retardé.

La phase de synchronisation des variables peut aussi être effectuée au niveau d'un groupe de variables et être intercalée avant la phase de précharge au niveau de chaque cellule de calcul apte à recevoir plusieurs signaux véhiculant des variables d'entrée, la synchronisation étant effectuée sur le signal le plus retardé.

La phase de synchronisation est par exemple réalisée, pour chaque cellule du réseau différentiel, par un mécanisme de rendez-vous utilisant des cellules d'unanimité dont les entrées sont communes aux entrées de ladite cellule du réseau différentiel et dont la sortie commande le fonctionnement de ladite cellule, le rendez-vous ayant lieu lorsqu'il y a unanimité de valeurs sur les entrées des cellules d'unanimité, les sorties de la porte ne changant que lorsque le rendez-vous est atteint à l'issue de la synchronisation.

Pour faciliter la compréhension on considèrera que tous les couples de signaux (correspondants aux variables non complémentées et complémentées) sont dans l'état (0,0) lors de la phase de précharge. Le raisonnement s'appliquerait aussi avec l'état (1,1).

Les cellules d'unanimité sont de deux types : unanimité à un $U_1$, et unanimité à zéro $U_0$, ayant les entrées communes et autorisant respectivement la phase d'évaluation et la phase de précharge :

- la cellule d'unanimité à 1 $U_1$ génère un signal autorisant l'évaluation dès que toutes les variables d'entrée ont quitté l'état de précharge. Cette condition revient à dire que tous les couples de signaux d'entrée sont passés de l'état de précharge (0,0) à un des états (0,1) ou (1,0).
- la cellule d'unanimité à 0 $U_0$ génère un signal autorisant la précharge dès que toutes les variables d'entrée ont quitté l'état d'évaluation. Cette condition revient à dire que tous les couples de signaux d'entrée sont passés de l'état d'évaluation (0,1) ou (1,0) à l'état de précharge (0, 0)..

Les cellules de calculs sont gelées (ou mémorisées) tant que les unanimités à un ou zéro sont inactifs. Ceci est assuré par les fonctions mémoires de rendez-vous.

Dans un mode de réalisation particulier, une porte reçoit un signal global PRE de mise à zéro des variables d'entrée avant la phase de précharge. Ce signal est commun à toutes les portes et est en avance par rapport aux autres signaux.

La précharge assurée par PRE permet d'éliminer à la fois la cellule d'unanimité $U_0$ et la mémorisation nécessaire au rendez-vous

La phase de synchronisation utilise par exemple :

- une cellule d'unanimité $U_1$ qui génère un signal autorisant l'évaluation dès que toutes les variables d'entrées ont quitté l'état de précharge ;
- une porte combinant la sortie de la cellule $U_1$ et du signal PRE de mise à zéro ;

Le signal combiné de synchronisation $U/\overline{PRE}$ autorisant selon sa valeur binaire la phase de précharge ($U/\overline{PRE}$=0) ou la phase d'évaluation ($U/\overline{PRE}$=1).

L'invention a également pour objet un circuit protégé selon le procédé précédemment décrit. Le circuit programmable, par exemple de cryptographie, comporte des portes elle-mêmes composées de cellules à base de mémoire définissant la fonction logique de chaque cellule, ledit circuit intégrant un réseau différentiel apte à effectuer des calculs sur des variables binaires composées de couples de signaux, le réseau différentiel comportant un premier réseau de cellules réalisant des fonctions logiques sur la première composante des couples et un deuxième réseau de cellules duales fonctionnant en logique complémentaire sur la deuxième composante des couples. Une étape de calcul comporte une phase de précharge mettant les variables dans un état connu à l'entrée des cellules, une phase d'évaluation où un calcul est effectué par les cellules et une phase de synchronisation avant chaque phase de précharge et d'évaluation.

Dans un mode de réalisation particulier, une cellule du réseau différentiel comportant la mémoire définissant sa fonction logique associée à un arbre de multiplexeurs, les entrées des multiplexeurs de la première colonne de l'arbre recevant les valeurs de la mémoire, la sortie du dernier multiplexeur formant la sortie de la cellule, le signal combiné de synchronisation $U/\overline{PRE}$ commande les multiplexeurs de la première colonne, les multiplexeurs des autres colonnes étant commandés par les signaux d'entrée de la cellule.

Les couples de signaux des variables d'entrée sont par exemple associés à la même colonne de multiplexeurs dans leur cellule respective.

Le circuit comporte par exemple au moins une porte protégée, quatre cellules de 2n entrées étant utilisées pour générer une porte protégée de 2n-1 entrées et deuxcellules étant utilisées pour réaliser l'unanimité $U_1$ et 2 cellules pour le réseau différentiel.

Le comporte par exemple au moins une porte protégée, huit cellules de 2n entrées étant utilisées pour générer une porte protégée de 2n entrées, quatre cellules étant utilisées pour réaliser les unanimités $U_1$ et $U_0$, deux cellules étant utilisées pour le réseau différentiel et deux cellules étant utilisées pour le rendez vous permettant de geler les sorties de la porte, les fonctions logiques utilisées devant respecter la propriété de croissance.

Le circuit peut dans un mode de réalisation, comporter au moins une cellule protégée, deux cellules de 2n entrées étant utilisées pour générer une porte protégée de n entrées, les deux cellules étant utilisées pour réaliser le réseau différentiel intégrant l'unanimité, les fonctions logiques utilisées devant respecter la propriété de croissance.

D'autres caractéristiques et avantages de l'invention apparaîtront à l'aide de la description qui suit faite en regard de dessins annexés qui représentent :

- la figure 1, une porte « ET » en logique différentielle ;
- la figure 2, une présentation des phases d'une étape de calcul en logique différentielle dans un circuit programmable, du type FPGA par exemple ;
- la figure 3, un exemple d'évaluation anticipée en logique différentielle ;
- la figure 4, une illustration de phases de synchronisation intercalées entre les phases de précharge et d'évaluation dans une étape de calcul à l'intérieur d'un circuit en logique BCDL (Balanced Cell-Based Differential Logic) selon l'invention ;
- la figure 5, une illustration des différences de chemins à l'intérieur d'un réseau différentiel pour parvenir à une cellule de calcul ;
- la figure 6, Le principe de fonctionnement d'une porte BCDL réalisant une synchronisation des variables à l'entrée suivi du calcul dans le réseau différentiel ;
- la figure 7, une illustration des phases de calcul simplifiées dans une porte BCDL selon l'invention ;
- la figure 8, Le principe de fonctionnement d'une porte BCDLpour la mise en oeuvre des phases de calcul simplifiées précitées à l'aide d'un signal global ;
- la figure 9, une présentation des chronogrammes des signaux intervenant dans les phases de calcul précitées ;
- la figure 10, une présentation de l'architecture d'une cellule de calcul dans un réseau programmable, notamment du type FPGA.
- les figures 11a, 11b, 11c et 11d, une illustration des équilibres de consommation à l'intérieur d'un circuit selon l'invention ;
- la figure 12, une présentation de la structure d'une porte BCDL;
- la figure 13, un exemple de réalisation de la fonction d'unanimité dans une cellule FPGA ;
- la figure 14, un exemple de réalisation d'une porte BCDL n'ayant pas une entrée de précharge globale, permettant d'accepter un grand nombre d'entrée et nécessitant des cellules de rendez-vous ;
- la figure 15, un exemple de réalisation d'une porte BCDL ayant peu d'entrée et où les fonctions d'unanimité et de calcul sont intégrées dans la même cellule.

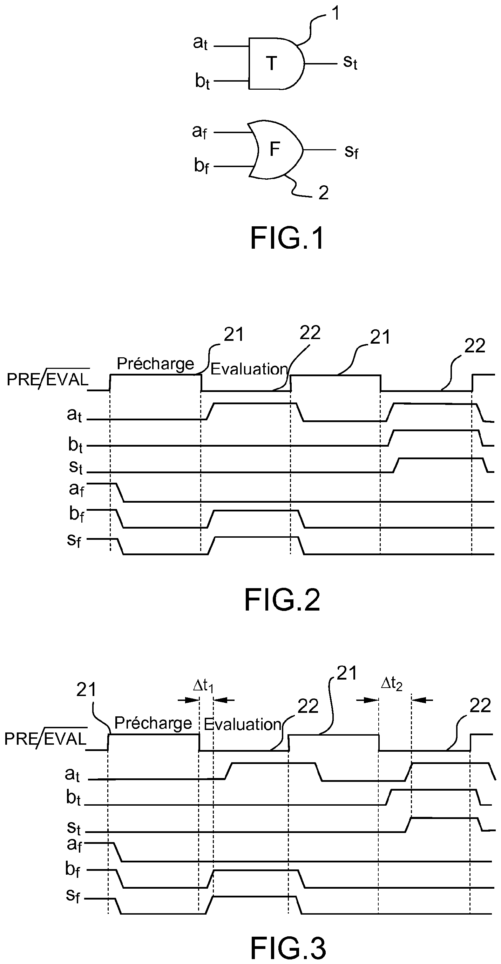

La figure 1 présente une porte «ET» 1, 2 en logique WDDL comme exemple d'illustration du principe de la logique différentielle. Celle-ci est composée de deux réseaux logiques duaux 1, 2, fonctionnant en logiques complémentaires. Les données sont représentées en double rail, chaque variable logique $a$ étant formée d'un couple de signaux $(a_t, a_f)$ codés de la façon suivante :

- (0, 0) pour l'état de repos : la valeur de $a$ n'est pas définie, elle est noté $\Omega$ dans la suite ;
- (1, 0) est un état actif où a = 1 ;
- (0, 1) est un état actif où a = 0.

Une porte logique H à deux entrées a et b et une sortie s est physiquement représentée par deux portes 1, 2 ayant respectivement les fonctions logiques $T(a_t, b_t)$ et $F(a_f, b_f)$ telles que :

- $s_t = T(a_t, b_t)$
- $s_f = F(a_f, b_f)$

Le réseau logique « vrai » correspond à la fonction $T$ qui délivre le signal $s_t$. Le réseau logique dual «faux» correspond à la fonction $F$ qui délivre le signal dual $s_f$ La figure 1 illustre la porte « ET » où le réseau « vraie » 1 réalisant la fonction $T$ reçoit les deux entrées non complémentées $a_t$ et $b_t$. La fonction duale « OU » réalise la fonction $F$ . Pour un signal $x$ les relations suivantes sont vérifiées :

- $T(x) = H(x)$
- $F(x) = \overline{H}(\overline{x})$

La figure 2 présente les phases d'une étape de calcul en logique différentielle, par exemple du type WDDL (Wave Dynamic Differential Logic). Cette étape comporte des phases successives de précharge 21 et d'évaluation 22. Des exemples d'états des variables d'entrées $a_t, b_t, a_f, b_f$ et des variables de sorties correspondantes $s_t, s_f$ sont présentés en regard des phases de précharge et d'évaluation. Les chronogrammes de la figure 2 montrent que le nombre de transitions est le même, trois en l'occurrence, lors du passage de la phase de précharge à la phase d'évaluation et vice-versa. Comme la consommation est directement liée au nombre de transitions dans les technologies électroniques de type CMOS notamment, la consommation est ainsi équilibrée.

Cependant, malgré un apparent équilibre de la consommation, des phénomènes du second ordre peuvent laisser place à des fuites d'information. Par exemple si $a_t$ est en avance ou en retard par rapport à $a_f$ le décalage temporel peut être perçu par un attaquant qui en déduit donc la valeur de la variable $a$. Ce phénomène peut être déjoué en utilisant une interconnexion à double rail équilibrée, c'est-à-dire avec deux lignes parfaitement équilibrées d'un point de vue électrique, notamment en termes de longueur et de capacité. En supposant que les lignes à double rail soient équilibrées, il existe bien d'autres phénomènes laissant des possibilités d'attaques dans les logiques proposées actuellement. Comme indiqué précédemment, les plus importants sont notamment l'évaluation anticipée et les différences technologiques des réseaux différentiels.

La figure 3 des illustre des chronogrammes en logique WDDL avec une évaluation anticipée. Si le signal *a* est en avance ou en retard par rapport au signal *b*, il peut se produire une évaluation anticipée comme l'illustre cette figure 3. Le retard entre les composantes des signaux *a* et *b* est donc reflété à la sortie de la porte 1, 2 par la différence logique entre la fonction « ET » et la fonction « OU ». Les décalages $\Delta t_1$ et $\Delta t_2$ permettent de savoir si le signal *a* vaut 0 ou 1. Plus précisément dans la figure 3, *b* est toujours plus rapide que *a*. Selon que *b* vaut 0, comme dans la première moitié des chronogrammes ou 1, comme dans la seconde moitié, la sortie évalue moins vite, à $\Delta t_1$, ou plus vite, à $\Delta t_2$, ce qui trahit sa valeur. De même qu'il y a une évaluation 22 anticipée, il existe une précharge 21 anticipée qui fait que des signaux sont plus rapides à passer à 0 que d'autres.

Deux raisons font notamment que *b* est plus rapide que *a* :

- les données $b_t$ et $b_f$ sont raccordées directement à la porte tandis que $a_t$ et $a_f$ passent par une multitude d'interconnexions et donc d'éléments de commutations ;
- les données $a_t$ et $a_f$ passent par des portes intermédiaires alors que $b_t$ et $b_f$ arrivent directement.

Un autre phénomène, entraînant une vulnérabilité aux attaques par analyse de consommation, lié à la technologie est la différence d'énergie dépensée entre un réseau logique et son complémentaire. Par exemple en logique WDDL, pour la porte « ET » si *a* vaut 1, la porte « ET » commute si *b* vaut 1 sinon c'est la porte « OU ». Il est donc possible d'en déduire la valeur de *b* si les transitions des portes « ET » et « OU » ne dépensent pas la même énergie. La logique MDPL s'affranchit de ce problème mais avec un surcoût. Il est tout d'abord nécessaire de disposer d'un générateur de vrai aléa qui produit un bit de masque par cycle d'horloge. De plus une entrée de chaque porte doit être dédiée pour le masque.

De par sa nature différentielle, la logique WDDL est nécessairement deux fois plus complexes qu'une logique normale. De plus une contrainte importante s'ajoute sur le choix des fonctions *T* et *F* qui doivent être croissantes. Cette condition permet à la fois d'éviter les commutations parasites lors des phases de calcul et de garantir la propagation de la valeur de précharge le long du cône de logique. Cette contrainte de croissance limite le type de cellules dans un FPGA. La logique MDPL est encore plus complexe à réaliser en FPGA.

L'invention réalise notamment un nouveau type de logique éliminant les défauts de l'évaluation anticipée et des différences technologiques que l'on appellera par la suite logique BCDL, selon l'expression anglo-saxonne « Balanced Cell-based Differential Logic ». Dans un circuit fonctionnant en logique BCDL :

- une étape de synchronisation des données est ajoutée à chaque porte avant le passage effectif à la phase de précharge ou d'évaluation ;
- la synchronisation est effectuée au niveau d'un groupe de données ;
- le calcul de synchronisation est réalisé en parallèle du calcul effectué par le circuit.

L'invention applique ce fonctionnement :

- au niveau global, c'est-à-dire entre les cellules de calcul *T,F* ;
- au niveau local, c'est-à-dire en interne des cellules de calcul.

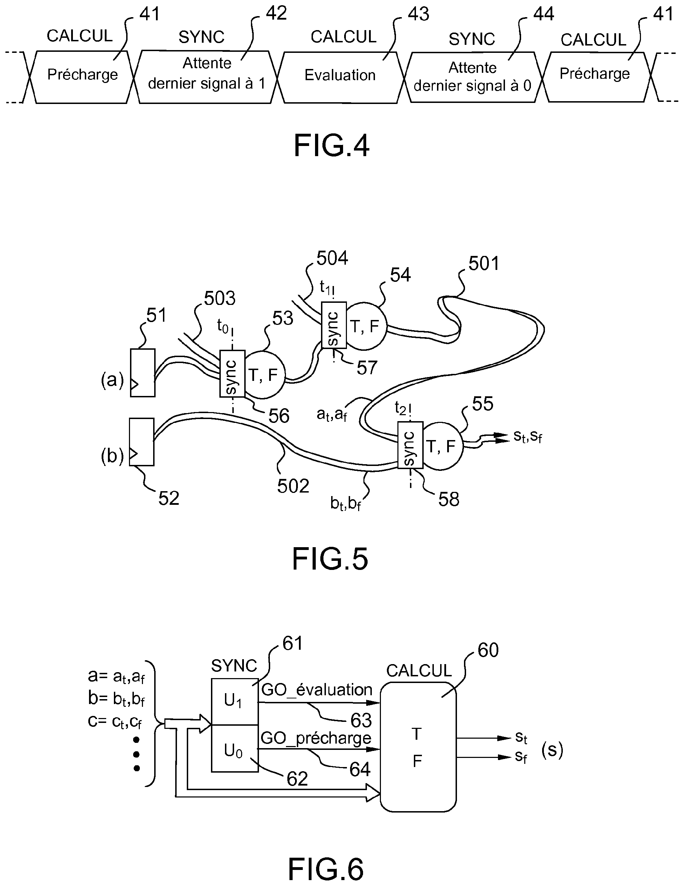

La figure 4 illustre l'étape de synchronisation. Cette étape de synchronisation est effectuée avant la phase d'évaluation, à chaque porte, aux travers des réseaux duaux *T,F*. Elle permet notamment d'éviter les problèmes d'évaluation et de précharge anticipées.

La synchronisation consiste à attendre le signal le plus en retard. Les causes de l'évaluation anticipée provoquée par la différence de temps de calcul entre deux signaux sont donc annihilées par l'attente du signal le plus retardé.

La figure 4 illustre les quatre phases successives 41, 42, 43, 44 de synchronisation et de calcul composant un cycle de précharge et d'évaluation. Une première phase 41 exécute le calcul de précharge, une deuxième phase 42 effectue une première synchronisation par l'attente par exemple du dernier signal à l'état 1. Cette phase est suivie de la phase d'évaluation 43 elle-même suivie d'une phase de synchronisation 44 avant l'étape de précharge 41 du cycle suivant. Cette étape de synchronisation 44 impose l'attente par exemple du dernier signal à 0.

La figure 5 illustre une partie des réseaux logiques duaux comportant deux registres 51, 52 et des portes duales *T,F* 53, 54, 55. Un premier chemin 501 véhicule un signal a issu d'un premier registre 51 et un deuxième chemin 502 véhicule un signal b issu d'un deuxième registre 52. Les deux chemins se regroupent à l'entrée d'une porte *T,F* 55, cette dernière délivrant un signal de sortie s. Le signal a est retardé dans le premier chemin par une succession de portes 53, 54. Ces portes reçoivent par ailleurs en entrée des signaux issus d'autres chemins 503, 504. A l'entrée de chaque porte un bloc 56, 57, 58, effectue une synchronisation. Dans l'exemple de la figure 5, la porte finale 55 délivrant le signal s n'effectue son calcul qu'à un temps $t_2$ correspondant à l'arrivée du signal le plus retardé, en l'occurrence le signal a dans cet exemple.

La synchronisation en logique asynchrone se fait entre deux signaux avec une cellule de rendez-vous « RV ». Les cellules RV ne passe à une valeur logique L que si les deux entrées ont la même valeur logique L, sinon elles ne changent pas d'état. Une cellule RV est donc une mémoire qui ne change d'état que s'il y a unanimité, à 0 ou à 1, des signaux d'entrée. Dans la logique BCDL le rendez-vous s'effectue sur un groupe de données dans une même cellule du circuit FPGA. Des cellules spécifiques $U_0$, $U_1$ sont par exemple utilisées.

Une cellule $U_1$ génère un signal autorisant l'évaluation, ce signal passe à 1 dès que toutes les données ont quitté l'état $\Omega$ défini précédemment, plus particulière le signal noté $U_1(x, y, ...)$ est défini par la relation suivante :

$$U_1 (x, y, \ldots) = 1 \text{ si } x \neq (0, 0) \text{ et } y \neq (0, 0) \ldots, \text{ sinon } U_1 (x, y, \ldots) = 0 \quad (1)$$

Une cellule $U_0$ génère un signal autorisant le retour à l'état $\Omega$ des sorties. Ce signal passe à 1 dès que chacune des entrées est à l'état $\Omega$ conformément à la relation suivante :

$$U_0 (x, y, \ldots) = 1 \text{ si } x = y = (0, 0) \ldots, \text{ sinon } U_0 (x, y, \ldots) = 0 \quad\quad\quad (2)$$

Le démarrage du calcul ne se fait donc que s'il y a unanimité, c'est-à-dire si $U_0$ ou $U_1$ sont actifs, et le calcul est gelé tant qu'il n'y a pas d'unanimité, c'est-à-dire si $U_0$ et $U_1$ sont inactifs.

La figure 6 illustre le principe de la synchronisation en groupe de données. Les données a, b, c entrent en parallèle vers la porte duale *T,F* 60, qui effectue le calcul de précharge ou d'évaluation, et vers les cellules $U_1$ 61 et $U_0$ 62. La cellule $U_1$ envoie un signal d'autorisation d'évaluation 63 à la porte 60 et la cellule $U_0$ envoie un signal d'autorisation de précharge 64 à la porte.

Le calcul de la précharge est plus simple que le calcul d'évaluation car tous les signaux doivent passer à l'état 0 alors que l'évaluation correspond à un vrai calcul sur des signaux portant l'information. Cette propriété peut être exploitée en logique BCDL en supprimant par exemple la phase de synchronisation 44 avant la précharge en utilisant un signal global de mise à l'état 0 par exemple, plus rapide que les autres signaux.

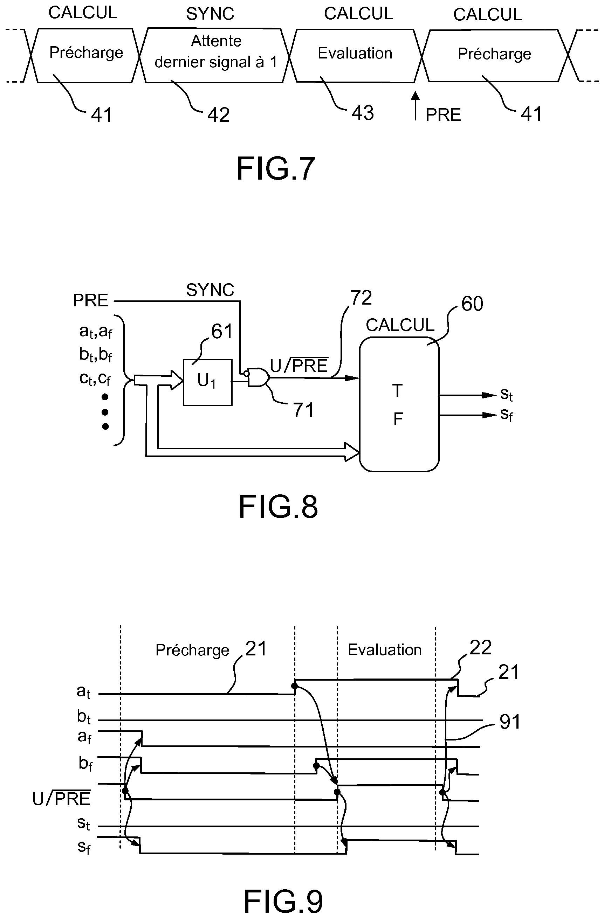

La figure 7 illustre ce signal PRE qui met à 0 l'ensemble des signaux juste avant la phase de précharge 41. Le cycle de précharge et d'évaluation ne comporte dans ce cas que trois phases dont une seule 42 de synchronisation avant la phase d'évaluation 43. La structure de la porte s'en trouve simplifiée pour deux raisons notamment :

- Il n'est plus nécessaire d'effectuer l'unanimité à 0 car elle est remplacée par le signal PRE ;
- Le signal PRE étant en avance, il n'est plus nécessaire de mémoriser la sortie de la porte pour que celle-ci ne change que lors de l'unanimité à 0 ou 1 (le Rendez-Vous). La sortie change à 0 tout de suite après l'arrivée de PRE et ne peut passer à 1 que s'il y a unanimité à 1.

La figure 8 illustre une structure de porte en logique BCDL simplifiée car l'unanimité à 0 nécessaire dans le cas d'évaluation, tel qu'illustré par la figure 7, est remplacée par une porte « ET » 71 recevant l'ordre de passage en précharge par le signal de précharge globale PRE. Le signal $U/\overline{PRE}$ en sortie 72 de la porte « ET » permet ainsi de synchroniser le calcul :

- quand $U/\overline{PRE}$ passe à 0, juste après le signal PRE, la précharge est forcée indépendamment des entrées et ;
- quand $U/\overline{PRE}$ passe à 1, indiquant que d'une part le signal PRE est à 1 et que d'autre part le rendez-vous des valeurs d'entrée s'est effectué, la phase d'évaluation débute.

La figure 9 présente les chronogrammes des signaux a, b, s et $U/\overline{PRE}$ au cours des phases de précharge 21 et d'évaluation 22. Ces chronogrammes montrent que la phase de précharge 21 est forcée indépendamment des entrées lors de la transition 91 du signal $U/\overline{PRE}$.

Dans les solutions exposées précédemment, appliquées au niveau global, la logique BCDL permet de combattre les problèmes liés à l'évaluation anticipée au niveau de l'ensemble du circuit. La robustesse vis-à-vis des attaques doit aussi se vérifier localement au niveau d'une seule porte BCDL, en particulier pour éviter les différences technologiques et l'évaluation anticipée locale. D'autre part le rajout de la synchronisation ne doit pas se faire au détriment d'une augmentation forte de la complexité.

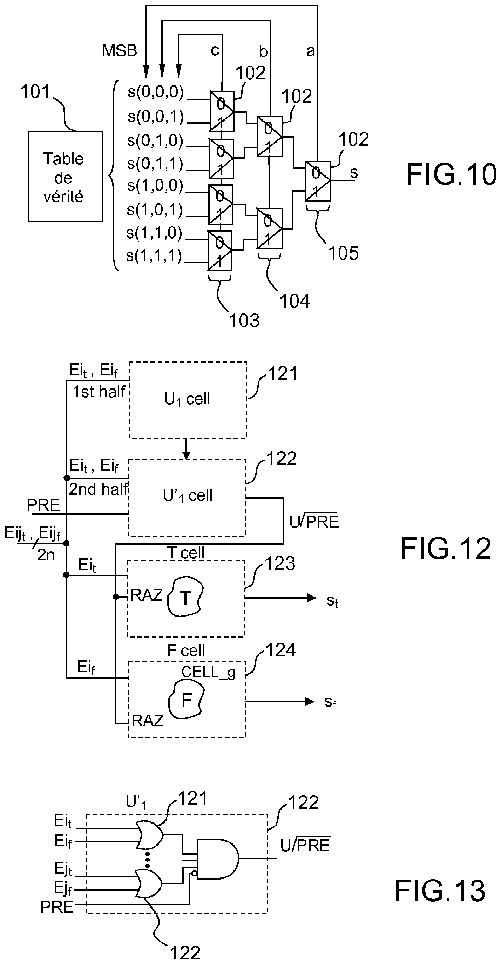

La figure 10 illustre la structure d'une cellule d'un circuit FPGA à trois entrées a, b, c. Dans un circuit FPGA la logique est réalisée dans des cellules à base de mémoire comportant des tables 101, appelée LUT selon l'expression anglo-saxonne « Look Up Table », définissant la fonction logique de la cellule. La figure 10 montre que la structure de la cellule est basée sur une table 101 (LUT) associée à un arbre de multiplexeurs 102 formant trois colonnes 103, 104, 105. La table 101 mémorise les valeurs binaires de la fonction s pour chacun des triplets (x, y, z) où x , y et z prenent la valeur 0 ou 1. La première colonne, ou colonne d'entrée, est formée des multiplexeurs 102 du premier étage de l'arbre, la troisième colonne 105 étant formée du multiplexeur du dernier étage, c'est-à-dire du multiplexeur de sortie. Les entrées a, b, c commandent les multiplexeurs. Le nombre de colonnes correspond ainsi au nombre d'entrées. Chacune des valeurs s(x, y, z) de la fonction est présente à l'entrée d'un multiplexeur de la colonne d'entrée 103. Les différentes combinaisons des valeurs binaires a, b, c qui commandent les étages de multiplexeurs permettent de sélectionner les entrées de la colonne d'entrée 103.

Selon l'invention, la robustesse locale est améliorée à partir des deux modes de brochage suivant :

- le signal $U/\overline{PRE}$ entre sur la première colonne de l'arbre de multiplexeurs ;
- les couples d'entrées « vrai » $e_t$ et « faux » $e_f$ sont associés à la même broche respective sur la porte T et sur la porte F.

Ces modes de brochage permettent d'obtenir des résultats important en ce qui concerne la sécurité locale, ils sont par ailleurs très peu coûteux à mettre en oeuvre.

En premier lieu, il n'y a pas de commutations parasites. Le signal $U/\overline{PRE}$ commutant en premier pendant la phase de précharge, les équipotentielles internes sont toutes forcées à 0 sans risque de commutations parasites lorsque les entrées de données commutent. De même, ce signal commute en dernier avant la phase d'évaluation. Ainsi, les multiplexeurs commandés par les données sélectionnent des zéros. Puis, le signal $U/\overline{PRE}$ laisse la valeur de la fonction transiter à travers les multiplexeurs pré-positionnés 102. En second lieu, une complexité réduite est obtenue. En effet, pour la même raison, il n'est pas nécessaire d'avoir des fonctions croissantes pour éviter les commutations parasites car les multiplexeurs sur les entrées sont déjà positionnés correctement. Ceci permet notamment d'utiliser toutes les fonctions possible, au nombre de $2^n$, pour une table LUT à n entrées, offrant un potentiel d'optimisation beaucoup plus large qu'avec un sous-ensemble de fonctions croissantes. Par exemple pour une LUT à 4 entrées, il n'y a que 166 fonctions croissantes parmi les 65536 fonctions possibles.

En troisième lieu, une forte réduction du biais technologique est obtenue. Le nombre total de commutations des équipotentielles de T et de F ne change pas en fonction des combinaisons des entrées. Ce nombre est constant, égal à $2^n$ - 1 lorsque n est le nombre d'entrées de la LUT. Ceci rend ainsi difficile de discriminer l'activité de T de celle de F car le profil de consommation est identique au niveau du couple T et F. De plus, la succession des commutations des multiplexeurs dans le temps est indépendante des données.

Enfin il y a absence d'évaluation et de précharge anticipées à l'intérieur de la table LUT. En effet, c'est le signal $U/\overline{PRE}$ qui retarde l'évaluation, arrivant toujours après les signaux, et qui, sans attendre les données, force la précharge. En d'autres termes, l'évaluation est toujours retardée et la précharge toujours anticipée, et cela indépendamment des données.

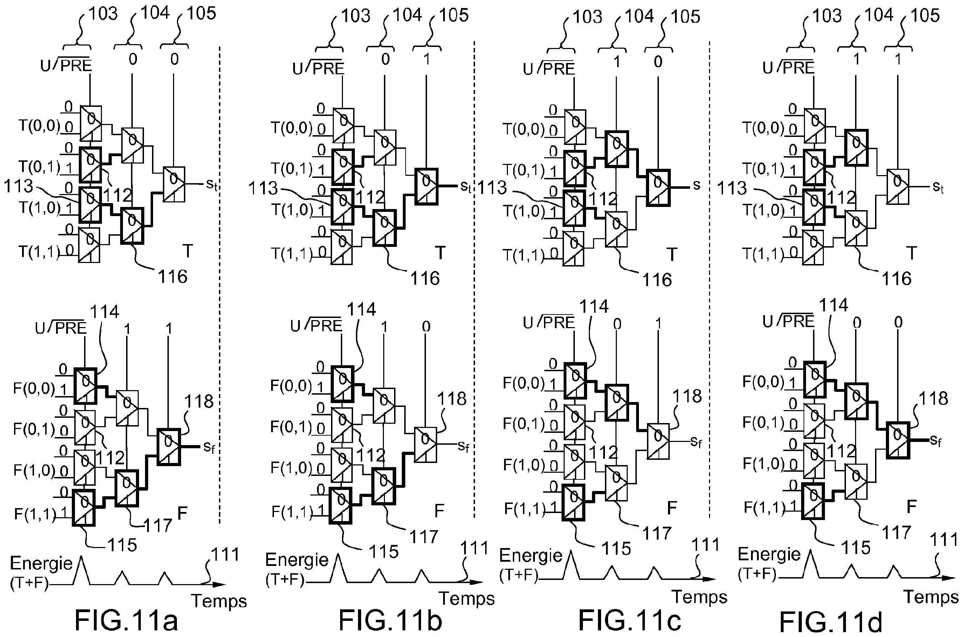

Les figures 11a, 11b, 11c et 11d illustrent l'équilibre des consommations lors des commutations en logiques BCDL dans l'exemple d'une table LUT à trois entrées. Plus particulièrement ces quatre figures présentent toutes les combinaisons dans une porte XOR à deux entrées lorsque le signal $U/\overline{PRE}$ commute. Pour toutes ces figures, la cellule du haut est la porte « vrai » T et la cellule du bas la porte «faux» F. Les pics de consommation d'énergie globale fonction du temps correspondant aux commutations des circuits T et F sont représentés par une courbe 111, les pics étant représentés en regard des colonnes et correspondent à l'énergie consommée lors de la commutation de leurs colonnes correspondantes. A titre d'exemple, sur la figure 11a correspond au cas où le signal d'entrée, connecté aux deuxième 104 et troisième 105 colonnes est égal à (0, 0). Les multiplexeurs représentés en gras 112, 113, 114, 115, 116, 117, 118 voient leur sortie commuter. La courbe 111 montre les pics de consommations d'énergie correspondant à cette première combinaison (0, 0). Les courbes 111 de consommations associées aux combinaisons des figures suivantes sont identiques. Il y a donc un équilibre global au niveau du couple T, F, que ce soit en termes de temps de commutation ou de consommation énergétique. En d'autres termes, comme le montre les figures 11a, 11b, 11c, 11d il y a un nombre simultané de commutations pour chaque combinaison (0, 0), (0, 1), (1, 0), (1, 1).

A partir d'un programme de réalisation d'une application dans un FPGA quelconque, le passage en logique BCDL peut se faire d'une façon automatique. Un outil d'analyse, obtenu à partir des outils standards des FPGA permet d'opérer une transformation vers les logiques présentées précédemment. L'analyse se limite à une substitution des éléments logiques aux variantes des portes BCDL. Le routage des paires de fils d'interconnexion doit être réalisé de façon équilibrée.

La figure 12 illustre la structure d'une porte BCDL qui contient quatre cellules 121, 122, 123, 124, à savoir deux pour l'unanimité à 1 121, 122, une pour la fonction T 123 et une pour sa fonction duale F 124. La mise en cascade de cellules $U_1$ décrites précédemment est possible.

Une porte BCDL est alors par exemple composée de :

- deux cellules duales 123, 124, fonctionnant en logiques complémentaires, chaque cellule recevant n entrées, $Ei_t$ pour la cellule T et $Ei_f$ pour la cellule F, i variant de 1 à n, les cellules T et F délivrent respectivement les composantes $s_t$ et $s_f$ du signal de sortie ;
- deux cellules $U_1$ pour faire l'unanimité à 1 et générer le signal $U/\overline{PRE}$, chaque cellule recevant n entrées correspondant à une moitié des couples $(Ei_t,Ei_f)$

La figure 13 illustre un exemple de réalisation de la cellule $U'_1$ 122 reliée en cascade à la cellule $U_1$ pour faire l'unanimité. Les entrées $(Ei_t,Ei_f)...$ $(Ej_t,Ej_f)$ sont reliées à des portes «OR» 121, les sorties de ces portes « OR » sont combinées en entrée d'une porte « ET » 122, le signal inversé $\overline{PRE}$ étant combiné en entré de cette porte 122 avec les sorties des portes « OR ». La sortie de la porte « ET » 122 délivre le signal $U/\overline{PRE}$.

Dans le cas d'une implémentation d'une porte BCDL sans précharge globale et avec un grand nombre d'entrées, le signal de précharge global PRE peut ne pas être utilisé. L'évolution des calculs se fait alors en quatre phases comme indiqué précédemment. Cela permet notamment de gagner une entrée sur les tables LUT des portes T et F et d'augmenter ainsi le nombre des entrées. En revanche il faut remplacer la précharge globale par le calcul d'unanimité à 0. D'autre part, il faut faire le rendez-vous (geler le calcul) quand il n'y a pas d'unanimité. Des cellules spécifiques de rendez-vous sont utilisées à cette fin.

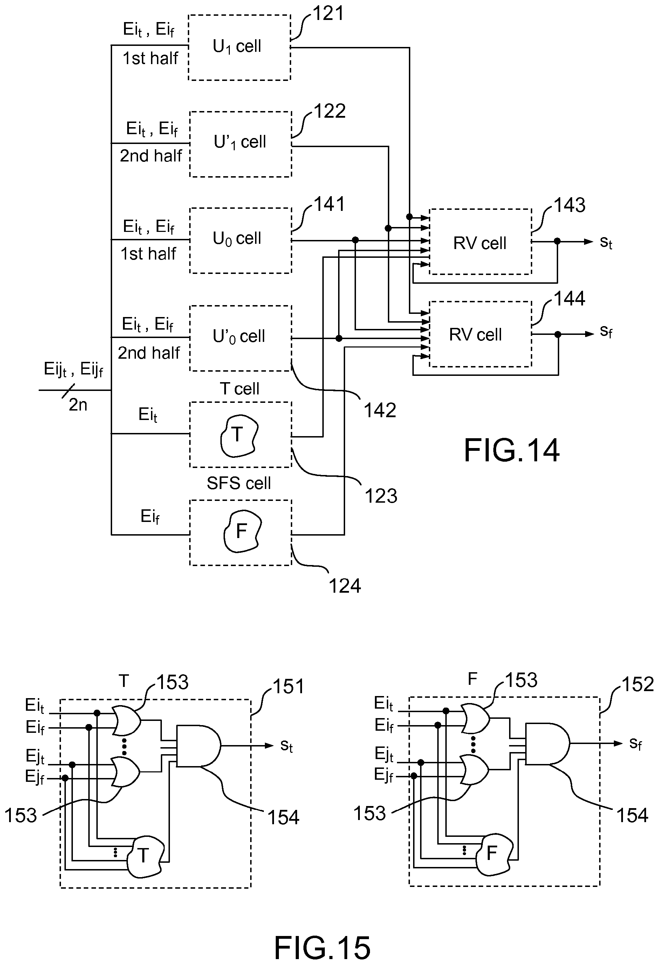

Une porte BCDL sans précharge globale, illustrée par la figure 14, est donc composée de :

- deux cellules 123, 124 fonctionnant en logiques complémentaires pour les fonctions T et F, chaque cellule recevant n entrées ;
- au moins deux cellules de rendez-vous RV 143, 144, délivrant les composantes $s_t$ et $s_f$ du signal de sortie, associées respectivement aux cellules des fonctions T et F, le nombre exact dépendant du nombre d'entrées de la LUT.
- deux cellules $U_0$ 141, 142 pour faire l'unanimité à 0, dont les sorties sont reliées aux entrées des cellules de rendez-vous ;
- deux cellules $U_1$ 121, 122 pour faire l'unanimité à 1, dont les sorties sont reliées aux entrées des cellules de rendez-vous ;

La porte illustrée par la figure 14 est notamment adaptée pour l'implémentation d'une boîte de substitution de l'algorithme de chiffrement DES.

La porte BCDL sans précharge globale doit toujours respecter la condition de croissance sur les fonctions, comme la logique WDDL par exemple.

Dans le cas d'une implémentation d'une porte BCDL sans précharge globale avec peu d'entrées, la fonction d'unanimité à 1 peut être intégrée aux cellules T et F comme l'illustre l'exemple de la figure 15. Il n'est alors plus nécessaire d'utiliser le signal PRE car la fonction d'unanimité à 1 remet à zéro les fonctions T et F avec l'arrivée du signal le plus rapide. Ce principe n'est toutefois pas applicable lorsque les cellules $U_1$ sont séparées car il existe alors une course de signaux, les cellules T et F pouvant passer à la phase de précharge plus tôt que prévu si la cellule $U_1$ est plus lente. Dans ce cas, il y a de nouveau propagation de la valeur 0 de la précharge car le signal PRE n'existe pas et il est nécessaire d'avoir recours à des fonctions croissantes pour éviter les commutations parasites et propager la précharge le long du cône logique. Dans l'exemple de la figure 15, les composantes duales $(Ei_t,Ei_f)$ des signaux d'entrée attaquent une porte « OR » 153 intégrée dans les cellules T 151 et F 152, ces entrées étant par ailleurs reliées aux entrées des portes T et F proprement dites des cellules 151, 152. La sorties de ces cellules ainsi que les sorties des portes «OR» 153 sont combinées à l'entrée d'une porte « ET » 154 dont les sorties délivrent les composantes $s_t$ et $s_f$ du signal de sortie. La figure 15 illustre une porte dans le cas particulier d'une fonction à faible nombre d'entrées. La logique pour l'unanimité à 1 est intégrée dans les cellules T et F, permettant ainsi de passer à la phase de précharge avec le signal le plus rapide.

**Revendications**

1. Procédé de protection d'un circuit de cryptographie programmable, ledit procédé utilisant des portes elle-mêmes composées de cellules à base de mémoire (101) définissant la fonction logique de chaque cellule, le circuit étant configuré de façon à intégrer un réseau différentiel apte à effectuer des calculs sur des variables binaires composées de couples de signaux, le réseau différentiel comportant un premier réseau (1) de cellules réalisant des fonctions logiques (T) sur la première composante des couples et un deuxième réseau (2) de cellules duales fonctionnant en logique complémentaire (F) sur la deuxième composante des couples, une étape de calcul comportant une phase de précharge (41) mettant les variables dans un état connu à l'entrée des cellules, une phase d'évaluation (43) où un calcul est effectué par les cellules, **caractérisé en ce que** :

- les portes sont en logique BCDL, la logique BCDL étant une logique différentielle comprenant en outre une étape de synchronisation globale des données préalable à la phase de précharge et une étape de synchronisation locale préalable à la phase d'evaluation.

2. Procédé selon la revendication 1, **caractérisé en ce que** la phase de synchronisation (42) des variables est effectuée au niveau d'un groupe de variables et est intercalée avant la phase d'évaluation au niveau de chaque cellule apte à recevoir plusieurs signaux véhiculant des variables d'entrée, la synchronisation étant effectuée sur le signal le plus retardé.

3. Procédé selon l'une quelconque des revendications précédentes, **caractérisé en ce que** la phase de synchronisation (44) des variables est effectuée au niveau d'un groupe de variables et est intercalée avant la phase de précharge au niveau de chaque cellule de calcul apte à recevoir plusieurs signaux véhiculant des variables d'entrée, la synchronisation étant effectuée sur le signal le plus retardé.

4. Procédé selon l'une quelconque des revendications 2 ou 3, **caractérisé en ce que** la phase de synchronisation (42, 44) est réalisée, pour chaque cellule du réseau différentiel (53, 54, 55), par un mécanisme de rendez-vous (56, 57, 58) utilisant des cellules d'unanimité dont les entrées sont communes aux entrées de ladite cellule du réseau différentiel et dont la sortie commande le fonctionnement de ladite cellule, le rendez-vous ayant lieu lorsqu'il y a unanimité de valeurs sur les entrées des cellules d'unanimité, les sorties de la porte ne changant que lorsque le rendez-vous est atteint à l'issue de la synchronisation.

5. Procédé selon la revendication 4, **caractérisé en ce que** la phase de synchronisation utilise deux cellules d'unanimité $U_1$ (61), $U_0$ (62) ayant les entrées communes au réseau différentiel de calcul et autorisent respectivement la phase d'évaluation et la phase de précharge :

- la cellule $U_1$ générant un signal (63) autorisant l'évaluation dès que toutes ses entrées, couples de signaux associés à chaque variable, ont quitté l'état de précharge ;
- la cellule $U_0$ générant un signal (64) autorisant la précharge dès que toutes ses entrées, couples de signaux associés à chaque variable, sont passées à l'état de précharge.

6. Procédé selon l'une quelconque des revendications précédentes, **caractérisé en ce qu'**il utilise pour la phase de synchronisation un signal global (PRE) de mise à zéro des variables d'entrée avant la phase de précharge, à la place de la cellule $U_0$, le signal (PRE) étant en avance par rapport aux autres signaux.

7. Procédé selon la revendication 6, **caractérisé en ce que** la phase de synchronisation utilise :

- une cellule $U_1$ (61) ayant les entrées communes au réseau différentiel de calcul et générant un signal autorisant l'évaluation dès que toutes ses entrées ont quitté l'état de précharge ;
- une porte (71) combinant la sortie de la cellule $U_1$ et le signal (PRE) de mise à zéro ;

le signal combiné de synchronisation ($U1\overline{PRE}$) autorisant selon sa valeur binaire la phase de précharge ou la phase d'évaluation.

8. Circuit programmable, comportant des portes elle-mêmes composées de cellules à base de mémoire (101) définissant la fonction logique de chaque cellule, ledit circuit intégrant un réseau différentiel apte à effectuer des calculs sur des variables binaires composées de couples de signaux, le réseau différentiel comportant un premier réseau (1) de cellules réalisant des fonctions logiques (T) sur la première composante des couples et un deuxième réseau (2) de cellules duales fonctionnant en logique complémentaire (F) sur la deuxième composante des couples, une étape de calcul comportant une phase de précharge (41) mettant les variables dans un état connu à l'entrée des cellules, une phase d'évaluation (43) où un calcul est effectué par les cellules, **caractérisé en ce que** :

- les portes sont en logique BCDL, la logique BCDL étant une logique différentielle comprenant en outre une étape de synchronisation globale des données préalable à la phase de précharge et une étape de synchronisation locale préalable à la phase d'evaluation.

9. Circuit selon la revendication 8, **caractérisé en ce que** la phase de synchronisation (42) des variables est effectuée au niveau d'un groupe de variables et est intercalée avant la phase d'évaluation au niveau de chaque cellule apte à recevoir plusieurs signaux véhiculant des variables d'entrée, la synchronisation étant effectuée sur le signal le plus retardé.

10. Circuit selon l'une quelconque des revendications 8 ou 9, **caractérisé en ce que** la phase de synchronisation (44) des variables est effectuée au niveau d'un groupe de variables et est intercalée avant la phase de précharge au niveau de chaque cellule de calcul apte à recevoir plusieurs signaux véhiculant des variables d'entrée, la synchronisation étant effectuée sur le signal le plus retardé.

11. Circuit selon l'une quelconque des revendications 9 ou 10, **caractérisé en ce que** la phase de synchronisation (42, 44) est réalisée, pour chaque cellule du réseau différentiel (53, 54, 55), par un mécanisme de rendez-vous (56, 57, 58) utilisant des cellules d'unanimité dont les entrées sont communes aux entrées de ladite cellule du réseau différentiel et dont la sortie commande le fonctionnement de ladite cellule, le rendez-vous ayant lieu lorsqu'il y a unanimité de valeurs sur les entrées des cellules d'unanimité, les sorties de la porte ne changant que lorsque le rendez-vous est atteint à l'issue de la synchronisation.

12. Circuit selon la revendication 11, **caractérisé en ce que** la phase de synchronisation utilise deux cellules d'unanimité $U_1$ (61), $U_0$ (62) ayant les entrées communes au réseau différentiel de calcul et autorisent respectivement la phase d'évaluation et la phase de précharge :

- la cellule $U_1$ générant un signal (63) autorisant l'évaluation dès que toutes ses entrées, couples de signaux associés à chaque variable, ont quitté l'état de précharge ;
- la cellule $U_0$ générant un signal (64) autorisant la précharge dès que toutes ses entrées, couples de signaux associés à chaque variable, sont passées à l'état de précharge.

13. Circuit selon l'une quelconque des revendications 8 à 12, **caractérisé en ce qu'**il utilise pour la phase de synchronisation un signal global (PRE) de mise à zéro des variables d'entrée avant la phase de précharge, à la place de la cellule $U_0$, le signal (PRE) étant en avance par rapport aux autres signaux.

14. Circuit selon la revendication 13, **caractérisé en ce que** la phase de synchronisation utilise :

- une cellule $U_1$ (61) ayant les entrées communes au réseau différentiel de calcul et générant un signal autorisant l'évaluation dès que toutes ses entrées ont quitté l'état de précharge;
- une porte (71) combinant la sortie de la cellule $U_1$ et le signal (PRE) de mise à zéro ;

le signal combiné de synchronisation ($U\overline{PRE}$) autorisant selon sa valeur binaire la phase de précharge ou la phase d'évaluation.

15. Circuit selon la revendication 14, **caractérisé en ce qu'**une cellule du réseau différentiel comportant la mémoire (101) définissant sa fonction logique associée à un arbre de multiplexeurs (103, 104, 105), les entrées des multiplexeurs de la première colonne (103) de l'arbre recevant les valeurs de la mémoire, la sortie du dernier multiplexeur (102) formant la sortie de la cellule, le signal combiné de synchronisation ($U\overline{PRE}$) commande les multiplexeurs de la première colonne (103), les multiplexeurs des autres colonnes étant commandés par les signaux d'entrée de la cellule.

16. Circuit selon la revendication 15, caractérisé en ce les couples de signaux des variables d'entrée sont associés à la même colonne de multiplexeurs dans leur cellule respective.

17. Circuit selon l'une quelconque des revendications 8 à 16, **caractérisé en ce qu'**il comporte au moins une porte protégée, quatre cellules de 2n entrées étant utilisées pour générer une porte protégée de 2n-1 entrées (12) et deux cellules étant utilisées pour réaliser l'unanimité $U_1$ et 2 cellules pour le réseau différentiel.

18. Circuit selon l'une quelconque des revendications 8 à 17, **caractérisé en ce qu'**il comporte au moins une porte protégée, huit cellules de 2n entrées étant utilisées pour générer une porte protégée de 2n entrées (14), quatre cellules étant utilisées pour réaliser les unanimités $U_1$ et $U_0$, deux cellules étant utilisées pour le réseau différentiel et deux cellules étant utilisées pour le rendez vous permettant de geler les sorties de la porte, les fonctions logiques utilisées devant respecter la propriété de croissance.

**19.** Circuit selon l'une quelconque des revendications 8 à 18, **caractérisé en ce qu'**il comporte au moins une cellule protégée, deux cellules de 2n entrées étant utilisées pour générer une porte protégée de n entrées (15), les deux cellules étant utilisées pour réaliser le réseau différentiel intégrant l'unanimité, les fonctions logiques utilisées devant respecter la propriété de croissance.

**20.** Circuit selon l'une quelconque des revendications 8 à 19, **caractérisé en ce qu'**il effectue une fonction de cryptographie.

**21.** Circuit selon l'une quelconque des revendications 8 à 20, **caractérisé en ce que** ledit circuit est du type FPGA.

**Patentansprüche**

**1.** Verfahren zum Schutz einer programmierbaren Kryptographieschaltung, wobei das Verfahren Gates verwendet, die selbst aus speicherbasierten Zellen (101) bestehen, die die logische Funktion jeder Zelle definieren, wobei die Schaltung konfiguriert ist, um ein differenzielles Netzwerk zu integrieren, das in der Lage ist, Berechnungen über binäre Variablen durchzuführen, die aus Signalpaaren bestehen, wobei das differenzielle Netzwerk ein erstes Netzwerk (1) von Zellen umfasst, die logische Funktionen (T) an der ersten Komponente der Paare ausführen, und ein zweites Netzwerk (2) von dualen Zellen, die in komplementärer Logik (F) auf der zweiten Komponente der Paare funktionieren, einen Berechnungsschritt, der eine Vorladephase (41) umfasst, die die Variablen am Zelleingang in einen bekannten Zustand versetzt, eine Auswertungsphase (43), in der eine Berechnung durch die Zellen durchgeführt wird, **dadurch gekennzeichnet, dass**:

- die Gates die Logik BCDL aufweisen, wobei die Logik BCDL eine differenzielle Logik ist, die ferner einen globalen Datensynchronisationsschritt vor der Vorladephase und einen lokalen Synchronisationsschritt vor der Auswertungsphase umfasst.

**2.** Verfahren nach Anspruch 1, **dadurch gekennzeichnet, dass** die Synchronisationsphase (42) der Variablen auf Ebene einer Gruppe von Variablen durchgeführt wird und vor der Auswertungsphase auf Ebene jeder Zelle eingefügt wird, die in der Lage ist, mehrere Signale zu empfangen, die Eingangsvariablen tragen, wobei die Synchronisation an dem am stärksten verzögerten Signal durchgeführt wird.

**3.** Verfahren nach einem der vorhergehenden Ansprüche, **dadurch gekennzeichnet, dass** die Synchronisationsphase (44) der Variablen auf Ebene einer Gruppe von Variablen durchgeführt und vor der Vorladephase auf Ebene jeder Berechnungszelle eingefügt wird, die in der Lage ist, mehrere Signale zu empfangen, die Eingangsvariablen tragen, wobei die Synchronisation an dem am stärksten verzögerten Signal durchgeführt wird.

**4.** Verfahren nach einem der Ansprüche 2 oder 3, **dadurch gekennzeichnet, dass** die Synchronisationsphase (42, 44) für jede Zelle des differenziellen Netzwerks (53, 54, 55) durch einen Zusammenführungsmechanismus (56, 57, 58) unter Verwendung von Einstimmigkeitszellen durchgeführt wird, deren Eingänge den Eingängen der differenziellen Netzwerkzelle gemeinsam sind und deren Ausgang den Betrieb der Zelle steuert, wobei die Zusammenführung bei Einstimmigkeit der Werte an den Eingängen der Einstimmigkeitszellen erfolgt, wobei sich die Ausgänge des Gates nur dann ändern, wenn die Zusammenführung am Ende der Synchronisation erreicht ist.

**5.** Verfahren nach Anspruch 4, **dadurch gekennzeichnet, dass** die Synchronisationsphase zwei Einstimmigkeitszellen $U_1$ (61), $U_0$ (62) verwendet, die gemeinsame Eingänge zu dem differenziellen Berechnungsnetzwerk aufweisen und die Auswertungsphase bzw. die Vorladephase autorisieren:

- die Zelle $U_1$ erzeugt ein Signal (63), das die Auswertung autorisiert, sobald alle ihre Eingänge, die mit jeder Variablen assoziierten Signalpaare, den Vorladezustand verlassen haben;
- die Zelle $U_0$ erzeugt ein Signal (64), das die Vorladung autorisiert, sobald alle ihre Eingänge, die mit jeder Variablen assoziierten Signalpaare, in den Vorladezustand übergegangen sind.

**6.** Verfahren nach einem der vorherigen Ansprüche, **dadurch gekennzeichnet, dass** es für die Synchronisationsphase ein globales Signal (PRE) zum Nullstellen der Eingangsvariablen vor der Vorladephase anstelle der Zelle $U_0$ verwendet, wobei das Signal (PRE) in Bezug auf die anderen Signale im Voraus erfolgt.

**7.** Verfahren nach Anspruch 6, **dadurch gekennzeichnet, dass** die Synchronisationsphase Folgendes verwendet:

- eine Zelle $U_1$ (61), bei der die Eingänge zu dem differenziellen Berechnungsnetzwerk gemeinsam sind, und die ein Signal erzeugt, das die Auswertung autorisiert, sobald alle ihre Eingänge den Vorladezustand verlassen haben;

- ein Gate (71), das den Ausgang der Zelle $U_1$ und das Signal (PRE) zum Nullstellen kombiniert;

wobei das kombinierte Synchronisationssignal ($U/\overline{PRE}$) gemäß seinem Binärwert die Vorladephase oder die Auswertephase autorisiert.

8. Programmierbare Schaltung, umfassend Gates, die selbst aus speicherbasierten Zellen (101) bestehen, die die logische Funktion jeder Zelle definieren, wobei die Schaltung ein differenzielles Netzwerk integriert, das in der Lage ist, Berechnungen an binären Variablen durchzuführen, die aus Signalpaaren bestehen, wobei das differenzielle Netzwerk ein erstes Netzwerk (1) von Zellen umfasst, die logische Funktionen (T) an der ersten Komponente der Paare ausführen, und ein zweites Netzwerk (2) von dualen Zellen, die in komplementärer Logik (F) an der zweiten Komponente der Paare funktionieren, einen Berechnungsschritt, der eine Vorladephase (41) umfasst, die die Variablen am Zelleingang in einen bekannten Zustand versetzt, eine Auswertungsphase (43), in der eine Berechnung durch die Zellen durchgeführt wird, **dadurch gekennzeichnet, dass**:

- die Gates die Logik BCDL aufweisen, wobei die Logik BCDL eine differenzielle Logik ist, die ferner einen globalen Datensynchronisationsschritt vor der Vorladephase und einen lokalen Synchronisationsschritt vor der Auswertungsphase umfasst.

9. Schaltung nach Anspruch 8, **dadurch gekennzeichnet, dass** die Synchronisationsphase (42) der Variablen auf Ebene einer Gruppe von Variablen durchgeführt wird und vor der Auswertungsphase auf Ebene jeder Zelle eingefügt wird, die in der Lage ist, mehrere Signale zu empfangen, die Eingangsvariablen tragen, wobei die Synchronisation an dem am stärksten verzögerten Signal durchgeführt wird.

10. Verfahren nach einem der Ansprüche 8 oder 9, **dadurch gekennzeichnet, dass** die Synchronisationsphase (44) der Variablen auf Ebene einer Gruppe von Variablen und vor der Vorladephase auf Ebene jeder Berechnungszelle eingefügt wird, die in der Lage ist, mehrere Signale zu empfangen, die Eingangsvariablen tragen, wobei die Synchronisation an dem am stärksten verzögerten Signal durchgeführt wird.

11. Schaltung nach einem der Ansprüche 9 oder 10, **dadurch gekennzeichnet, dass** die Synchronisationsphase (42, 44) für jede Zelle des differenziellen Netzwerks (53, 54, 55) durch einen Zusammenführungsmechanismus (56, 57, 58) unter Verwendung von Einstimmigkeitszellen durchgeführt wird, deren Eingänge den Eingängen der differenziellen Netzwerkzelle gemeinsam sind und deren Ausgang den Betrieb der Zelle steuert, wobei die Zusammenführung bei Einstimmigkeit der Werte an den Eingängen der Einstimmigkeitszellen erfolgt, wobei sich die Ausgänge des Gates nur dann ändern, wenn die Zusammenführung am Ende der Synchronisation erreicht ist.

12. Schaltung nach Anspruch 11, **dadurch gekennzeichnet, dass** die Synchronisationsphase zwei Einstimmigkeitszellen $U_1$ (61), $U_0$ (62) verwendet, die gemeinsame Eingänge zu dem differenziellen Berechnungsnetzwerk aufweisen und die Auswertungsphase bzw. die Vorladephase autorisieren:

- die Zelle $U_1$ erzeugt ein Signal (63), das die Auswertung autorisiert, sobald alle ihre Eingänge, die mit jeder Variablen assoziierten Signalpaare, den Vorladezustand verlassen haben;
- die Zelle $U_0$ erzeugt ein Signal (64), das die Vorladung autorisiert, sobald alle ihre Eingänge, die mit jeder Variablen assoziierten Signalpaare, in den Vorladezustand übergegangen sind.

13. Schaltung nach einem der Ansprüche 8 bis 12, **dadurch gekennzeichnet, dass** es für die Synchronisationsphase ein globales Signal (PRE) zum Nullstellen der Eingangsvariablen vor der Vorladephase anstelle der Zelle $U_0$ verwendet, wobei das Signal (PRE) in Bezug auf die anderen Signale im Voraus erfolgt.

14. Schaltung nach Anspruch 13, **dadurch gekennzeichnet, dass** die Synchronisationsphase Folgendes verwendet:

- eine Zelle $U_1$ (61), bei der die Eingänge zu dem differenziellen Berechnungsnetzwerk gemeinsam sind, und die ein Signal erzeugt, das die Auswertung autorisiert, sobald alle ihre Eingänge den Vorladezustand verlassen haben;
- ein Gate (71), das den Ausgang der Zelle $U_1$ und das Signal (PRE) zum Nullstellen kombiniert;

wobei das kombinierte Synchronisationssignal ($U/\overline{PRE}$) gemäß seinem Binärwert die Vorladephase oder die Auswertephase autorisiert.

15. Schaltung nach Anspruch 14, **dadurch gekennzeichnet, dass**, da eine Zelle des differenziellen Netzwerks den Speicher (101) umfasst, der seine logische Funktion definiert, die mit einer Multiplexerachse (103, 104, 105) assoziiert ist, die Eingänge der Multiplexer der ersten Spalte (103) der Achse die Werte des Speichers erhalten, wobei der Ausgang des letzten Multiplexers (102) den Ausgang der Zelle bildet, wobei das kombinierte Synchronisationssignal ($U/\overline{PRE}$) die Multiplexer der ersten Spalte (103) steuert, wobei die Multiplexer der anderen Spalten durch die Eingangssignale der Zelle gesteuert werden.

16. Schaltung nach Anspruch 15, **dadurch gekennzeichnet, dass** die Signalpaare der Eingangsvariablen mit der gleichen Multiplexerspalte in ihren jeweiligen Zellen assoziiert sind.

17. Schaltung nach einem der Ansprüche 8 bis 16, **dadurch gekennzeichnet, dass** sie mindestens ein geschütztes Gate umfasst, wobei vier Zellen mit 2n Eingängen verwendet werden, um ein geschütztes Gate mit 2n-1 Eingängen (12) zu erzeugen, und zwei Zellen verwendet werden, um die Einstimmigkeit $U_1$ und 2 Zellen für das differenzielle Netzwerk durchzuführen.

18. Schaltung nach einem der Ansprüche 8 bis 17, **dadurch gekennzeichnet, dass** sie mindestens ein geschütztes Gate umfasst, wobei acht Zellen mit 2n Eingängen verwendet werden, um ein geschütztes Gate mit 2n Eingängen (14) zu erzeugen, wobei vier Zellen verwendet werden, um die Einstimmigkeiten $U_1$ und $U_0$ durchzuführen, wobei zwei Zellen für das differenzielle Netzwerk und zwei Zellen für die Zusammenführung verwendet werden, die es Ihnen ermöglichen, die Ausgänge des Gates einzufrieren, wobei die verwendeten logischen Funktionen die Zunahmeeigenschaft einhalten müssen.

19. Schaltung nach einem der Ansprüche 8 bis 18, **dadurch gekennzeichnet, dass** sie mindestens eine geschützte Zelle umfasst, wobei zwei Zellen mit 2n Eingängen verwendet werden, um ein geschütztes Gate mit n Eingängen (15) zu erzeugen, wobei die beiden Zellen verwendet werden, um das differenzielle Netzwerk durchzuführen, das die Einstimmigkeit integriert, wobei die verwendeten logischen Funktionen die Zunahmeeigenschaft einhalten müssen.

20. Schaltung nach einem der Ansprüche 8 bis 19, **dadurch gekennzeichnet, dass** sie eine Kryptographiefunktion ausführt.

21. Schaltung nach einem der Ansprüche 8 bis 20, **dadurch gekennzeichnet, dass** die Schaltung vom Typ FPGA ist.

**Claims**

1. A method for protecting a programmable cryptography circuit, said method using gates themselves composed of memory-based cells (101) defining the logic function of each cell, the circuit being configured so as to integrate a differential network capable of making calculations on binary variables composed of pairs of signals, the differential network comprising a first network (1) of cells implementing logic functions (T) on the first component of the pairs and a second network (2) of dual cells operating in complementary logic (F) on the second component of the pairs, a calculation step comprising a precharge phase (41), in which the variables are put into a known state at the input of the cells, an evaluation phase (43), in which a calculation is made by the cells, **characterized in that**:

   - the gates are in BCDL logic, the BCDL logic being a differential logic further comprising a data general synchronization phase before the precharge phase and a local synchronization phase before the evaluation phase.

2. The method according to claim 1, **characterized in that** the variable synchronization phase (42) is carried out in a group of variables and is inserted before the evaluation phase in each cell capable of receiving several signals conveying input variables, the synchronization being carried out on the most delayed signal.

3. The method according to any of the preceding claims, **characterized in that** the variable synchronization phase (44) is carried out in a group of variables and is inserted before the precharge phase in each calculation cell capable of receiving several signals conveying input variables, the synchronization being carried out on the most delayed signal.

4. The method according to any of claims 2 or 3, **characterized in that** the synchronization phase (42, 44) is carried out, for each cell of the differential network (53, 54, 55), by a rendez-vous mechanism (56, 57, 58) using unanimity cells, the inputs of which are common to the inputs of said cell of the differential network and the output of which controls the operation of said cell, the rendez-vous taking place when there is unanimity of values on the inputs of the unanimity cells, the outputs of the gate changing only when the rendez-vous is reached after the synchronization.

5. The method according to claim 4, **characterized in that** the synchronization phase uses two unanimity cells $U_1$ (61), $U_0$ (62) having the common inputs to the differential calculation network and authorizing the evaluation phase and the precharge phase respectively:

   - the $U_1$ cell generating a signal (63) authorizing the evaluation as soon as all its inputs, pairs of signals associated with each variable, have left the precharge state;
   - the $U_0$ cell generating a signal (64) authorizing the precharge as soon as all its inputs, pairs of signals associated with each variable, have switched to the precharge state.

6. The method according to any of the preceding claims, **characterized in that** it uses, for the synchronization phase, a general signal (PRE) for resetting the input variables to zero before the precharge phase, instead of the $U_0$ cell, the signal (PRE) being ahead of the other signals.

7. The method according to claim 6, **characterized in that** the synchronization phase uses:

   - a $U_1$ cell (61) having inputs common to the differential calculation network and generating a signal authorizing the evaluation as soon as all its inputs have left the precharge state;
   - a gate (71) combining the output of the cell $U_1$ with the resetting signal (PRE),

   the combined synchonization signal ($U/\overline{PRE}$) authorizing, depending on its binary value, the precharge phase or the evaluation phase.

8. A programmable circuit, comprising gates themselves composed of memory-based cells (101) defining the logic function of each cell, said circuit integrating a differential network capable of making calculations on binary variables composed of pairs of signals, the differential network comprising a first network (1) of cells implementing logic functions (T) on the first component of the pairs and a second network (2) of dual cells operating in complementary logic (F) on the second component of the pairs, a calculation step comprising a precharge phase (41), in which the variables are put into a known state at the input of the cells, an evaluation phase (43), in which a calculation is made by the cells, **characterized in that**:

   - the gates are in BCDL logic, the BCDL logic being a differential logic further comprising a data general synchronization phase before the precharge phase and a local synchronization phase before the evaluation phase.

9. The circuit according to claim 8, **characterized in that** the variable synchronization phase (42) is carried out in a group of variables and is inserted before the evaluation phase in each cell capable of receiving several signals conveying input variables, the synchronization being carried out on the most delayed signal.

10. The circuit according to any of claims 8 or 9, **characterized in that** the variable synchronization phase (44) is carried out in a group of variables and is inserted before the precharge phase in each calculation cell capable of receiving several signals conveying input variables, the synchronization being carried out on the most delayed signal.

11. The circuit according to any of claims 9 or 10, **characterized in that** the synchronization phase (42, 44) is carried out, for each cell of the differential network (53, 54, 55), by a rendez-vous mechanism (56, 57, 58) using unanimity cells, the inputs of which are common to the inputs of said cell of the differential network and the output of which controls the operation of said cell, the rendez-vous taking place when there is unanimity of values on the inputs of the unanimity cells, the outputs of the gate changing only when the rendez-vous is reached after the synchronization.

12. The circuit according to claim 11, **characterized in that** the synchronization phase uses two unanimity cells $U_1$ (61), $U_0$ (62), having the inputs common to the differential calculation network and authorizing the evaluation phase and the precharge phase respectively:

   - the $U_1$ cell generating a signal (63) authorizing the evaluation as soon as all its inputs, pairs of signals associated with each variable, have left the precharge state;

- the $U_0$ cell generating a signal (64) authorizing the precharge as soon as all its inputs, pairs of signals associated with each variable, have switched to the precharge state.

**13.** The circuit according to any of claims 8 to 12, **characterized in that** it uses, for the synchronization phase, a general signal (PRE) for resetting the input variables to zero before the precharge phase, instead of the $U_0$ cell, the signal (PRE) being in advance relative to the other signals.

**14.** The circuit according to claim 13, **characterized in that** the synchronization phase uses:

- a $U_1$ cell (61) having inputs common to the differential calculation network and generating a signal authorizing the evaluation as soon as all its inputs have left the precharge state;
- a gate (71) combining the output of the $U_1$ cell with the resetting signal (PRE);

the combined synchonization signal ($U/\overline{PRE}$) authorizing, depending on its binary value, the precharge phase or the evaluation phase.

**15.** The circuit according to claim 14, **characterized in that**, since a cell of the differential network comprises the memory (101) defining its logic function associated with a tree of multiplexers (103 ,104, 105), the inputs of the multiplexers of the first column (103) of the tree receiving the values of the memory, the output of the last multiplexer (102) forming the output of the cell, the combined synchronization signal ($U/\overline{PRE}$) controls the multiplexers of the first column (103), the multiplexers of the other columns being controlled by the input signals of the cell.

**16.** The circuit according to claim 15, **characterized in that** the pairs of signals of the input variables are associated with the same column of multiplexers in their respective cell.

**17.** The circuit according to any of claims 8 to 16, **characterized in that** it comprises at least one protected gate, four cells of 2n inputs being used to generate a protected gate of 2n-1 inputs (12), and two cells being used to produce the unanimity $U_1$ and two cells for the differential network.

**18.** The circuit according to any of claims 8 to 17, **characterized in that** it comprises at least one protected gate, eight cells of 2n inputs being used to generate a protected gate of 2n inputs (14), four cells being used to produce the unanimities $U_1$ and $U_0$, two cells being used for the differential network and two cells being used for the rendez-vous for "freezing" the outputs of the gate, the logic functions used having to respect the increasing property.

**19.** The circuit according to any of claims 8 to 18, **characterized in that** it comprises at least one protected cell, two cells of 2n inputs being used to generate a protected gate of n inputs (15), the two cells being used to produce the differential network integrating the unanimity, the logic functions used having to respect the increasing property.

**20.** The circuit according to any of claims 8 to 19, **characterized in that** it performs a cryptography function.

**21.** The circuit according to any of claims 8 to 20, **characterized in that** said circuit is of the FPGA type.

FIG.1

FIG.2

FIG.3

CALCUL 41  SYNC 42  CALCUL 43  SYNC 44  CALCUL 41

Précharge | Attente dernier signal à 1 | Evaluation | Attente dernier signal à 0 | Précharge

## FIG.4

## FIG.5

$a = a_t, a_f$
$b = b_t, b_f$
$c = c_t, c_f$

SYNC 61

$U_1$

GO_évaluation 63

$U_0$ 62

GO_précharge 64

CALCUL 60

T
F

$s_t$
$s_f$ (s)

## FIG.6

| CALCUL | SYNC | CALCUL | CALCUL |
|--------|------|--------|--------|
| Précharge | Attente dernier signal à 1 | Evaluation | Précharge |

41      42      43    ↑ PRE      41

## FIG.7

PRE

SYNC

$a_t, a_f$

$b_t, b_f$

$c_t, c_f$

61

$U_1$

71

$U/\overline{PRE}$

72

CALCUL   60

T
F

$s_t$

$s_f$

## FIG.8

Précharge 21     Evaluation    22
21

$a_t$

$b_t$

$a_f$

$b_f$     91

$U/\overline{PRE}$

$s_t$

$s_f$

## FIG.9

FIG.10

FIG.12

FIG.13

FIG.11a  FIG.11b  FIG.11c  FIG.11d

EP 2 257 904 B1

FIG.14

FIG.15

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **K.TIRI ; I.VERBAUWHEDE.** A logic Level Design Methodology for a Secure DPA Resistant ASIC or FPGA Implementation. *Proceedings of DATE'04,* Février 2004, 246-251

- Masked Dual Rail Pre-Charge Logic : DPA Résistance without routing Constraints. **T.POPP ; S.MANGARD.** Proceedings of CHES'05. LNCS, Septembre 2005, vol. 3659, 172-186